# EUROPEAN PATENT SPECIFICATION

(11) **EP 3 967 566 B1**
(45) Date of publication and mention of the grant of the patent: **09.08.2023**
(21) Application number: 21777610.3
(22) Date of filing: 21.06.2021
(51) Int. Cl.: B60K 35/00, B60W 50/08, B60W 50/14

(54) **METHOD FOR DISPLAYING A VEHICLE NOTIFICATION, A VEHICLE DISPLAY DEVICE, VEHICLE AND A COMPUTER-READABLE STORAGE MEDIUM**
VERFAHREN ZUR ANZEIGE EINER FAHRZEUGMELDUNG, FAHRZEUGANZEIGEVORRICHTUNG, FAHRZEUG UND COMPUTERLESBARES SPEICHERMEDIUM
MÉTHODE D'AFFICHAGE D'UNE NOTIFICATION DE VÉHICULE, DISPOSITIF D'AFFICHAGE POUR VÉHICULE, VÉHICULE ET SUPPORT DE MÉMOIRE LISIBLE PAR ORDINATEUR

(30) Priority: 30.07.2020 CN 202010753705
(43) Date of publication of application: 16.03.2022
(73) Proprietor: Guangzhou Chengxing Zhidong Motors Technology Co., Ltd., Guangzhou, Guangdong 510000 (CN); Guangzhou Xiaopeng Motors Technology Co., Ltd., Guangzhou, Guangdong 510000 (CN)
(72) Inventor: LI, Juan, Guangzhou Guangdong 510000 (CN); JIANG, Jialiang, Guangzhou Guangdong 510000 (CN); CHEN, Zhilong, Guangzhou Guangdong 510000 (CN); LI, Dingxin, Guangzhou Guangdong 510000 (CN)
(74) Representative: Ran, Handong
(86) International application number: PCT/CN2021/101348
(87) International publication number: WO 2022/022162

(56) References cited:
- CN-A- 108 501 958
- CN-A- 110 027 570
- CN-A- 110 562 269
- CN-A- 110 696 839
- CN-A- 111 845 776
- JP-A- 2014 062 900
- KR-A- 20130 050 683
- US-A1- 2014 309 860
- US-A1- 2017 364 070
- US-A1- 2020 150 660

## Description

### TECHNICAL FIELD

The present invention relates to a technical field of vehicle safety, and particularly, to a method for vehicle notification a vehicle for vehicle notification.

### BACKGROUND

The smart vehicle is a new generation vehicle which is more humanized than an ordinary vehicle, and the smart vehicle is a typical high-tech complex that intensively uses technologies such as computer, in-vehicle sensing, information fusion, communications, artificial intelligence, automatic control, and the like. The smart vehicle not only relates to a combination of a vehicle network and a vehicle, but also generally combines factors of new energy and intelligence, aiming to realize a safe, comfortable, energy-saving and efficient driving, and becomes the new generation vehicle that can eventually operate autonomously without humans' operation. The smart vehicle is the new driving force for a reformation and a growth of the vehicle industry in the future.

At present, some smart vehicles may open and close doors through an application (APP), and may have feedback such as courtesy light, ambient light, and start-up sound when a user has entered the vehicle, which brings a good user experience to the user. However, there is almost no software interaction, let alone a corresponding information retrieval conducted for users, schedules, and environments. US2020/150660A1 provides a control method for providing a ride sharing service for an autonomous driving vehicle. US2014/309860A1 discloses a warning device for detecting attachment integrity issues of a wheel assembly of a vehicle while the vehicle is in motion. An automatic driving control method is also known in US2017/364070A1.

### SUMMARY

In view of the above, the present invention provides a method for displaying a vehicle notification and a corresponding vehicle display device for displaying a vehicle notification, which overcome or at least partially address the above mentioned problems.

In order to solve the problems, the method for displaying the vehicle notification disclosed in the present invention is applied in an in-vehicle terminal. The method includes:
performing a self-inspection in a vehicle in response to determining that a user has entered the vehicle; and displaying a corresponding interface reminding content by using a preset display mode in accordance with a result of the self-inspection, wherein the interface reminding content includes driving-related information, and the preset display mode includes a card display mode for the driving-related information. Said displaying the corresponding interface reminding content by using the preset display mode in accordance with the result of the self-inspection includes: determining a vehicle safety level in accordance with the result of the self-inspection, wherein the vehicle safety level is used to indicate a severity of impact on driving safety; displaying first driving-related information when the vehicle safety level is a first safety level, wherein the first driving-related information comprises weather information and road condition information, and the first safety level is a vehicle safety level corresponding to the result of the self-inspection being normal; displaying the first driving-related information and vehicle safety information when the vehicle safety level is a second safety level, wherein the vehicle safety information is vehicle inspection condition information corresponding to the result of the self-inspection, and the second safety level is a vehicle safety level corresponding to the result of the self-inspection being minor abnormality; displaying the first driving-related information and the vehicle safety information by using a third display rule corresponding to a third safety level when the vehicle safety level is the third safety level, wherein the third safety level is a vehicle safety level corresponding to the result of the self-inspection being ordinary abnormality, and the third display rule is that the display priority of the vehicle safety information is higher than a display priority of the first driving-related information; and displaying the vehicle safety information and playing the voice reminding content when the vehicle safety level is a fourth safety level, wherein the fourth safety level is a vehicle safety level corresponding to the result of the self-inspection being serious abnormality.

Optionally, the in-vehicle terminal is configured to communicate with a mobile terminal, and said displaying the first driving-related information when the vehicle safety level is the first safety level includes: obtaining second driving-related information of the mobile terminal, and displaying the second driving-related information, wherein the second driving-related information includes one or more of a destination address, navigation guidance information, subscription update information, or air quality information.

Optionally, information contained in the first driving-related information and the second driving-related information is classified, in accordance with an interactivity thereof, into interactable information and non-interactable information; wherein said displaying the first driving-related information includes: displaying the first driving-related information by using a first display rule corresponding to the first safety level, wherein the first display rule is that a display priority of the interactable information is higher than a display priority of the non-interactable information, and wherein said displaying the second driving-related information includes: displaying the second driving-related information by using the first display rule.

Optionally, said displaying the first driving-related information and the vehicle safety information includes: displaying the first driving-related information and the vehicle safety information by using a second display rule corresponding to the second safety level, wherein the second display rule is that the display priority of the interactable information is higher than the display priority of the non-interactable information, and higher than a display priority of the vehicle safety information.

Optionally, said displaying the first driving-related information and the vehicle safety information includes: playing voice reminding content for guiding the user to handle an abnormality.

Optionally, the method further includes: responding to an interactive instruction of the user for the voice reminding content, and contacting a handling personnel by using a preset communication mode.

The present invention further discloses a vehicle display device for displaying a vehicle notification. The vehicle includes: a self-inspection module configured to perform a self-inspection in a vehicle in response to determining that a user has entered the vehicle; a content display module configured to a corresponding interface reminding content by using a preset display mode in accordance with a result of the self-inspection, wherein the interface reminding content includes driving-related information, and the preset display mode includes a card display mode for the driving-related information. The content display module includes: a vehicle safety level determining submodule configured to determine a vehicle safety level in accordance with the result of the self-inspection, wherein the vehicle safety level is used to indicate a severity of impact on driving safety; and a content display submodule configured to display the corresponding interface reminding content by using the preset display mode in accordance with the vehicle safety level, wherein the preset display mode includes a plurality of display modes, and each of the plurality of display modes corresponds to one safety level. The content display submodule includes: a first content display unit configured to display first driving-related information when the vehicle safety level is a first safety level, wherein the first driving-related information includes weather information and road condition information, and the first safety level is a vehicle safety level corresponding to the result of the self-inspection being normal; a second content display unit configured to the first driving-related information and vehicle safety information when the vehicle safety level is a second safety level, wherein the vehicle safety information is vehicle inspection condition information corresponding to the result of the self-inspection, and the second safety level is a vehicle safety level corresponding to the result of the self-inspection being minor abnormality; a third content display unit configured to display the first driving-related information and the vehicle safety information when the vehicle safety level is a third safety level, wherein the third safety level is a vehicle safety level corresponding to the result of the self-inspection being ordinary abnormality; and a fourth content display unit configured to display the vehicle safety information and play the voice reminding content when the vehicle safety level is a fourth safety level, wherein the fourth safety level is a vehicle safety level corresponding to the result of the self-inspection being serious abnormality.

The first content display unit is further configured to obtain second driving-related information of the mobile terminal and display the second driving-related information, wherein the second driving-related information includes one or more of a destination address, navigation guidance information, subscription update information, or air quality information.

Optionally, information contained in the first driving-related information and the second driving-related information is classified, in accordance with an interactivity thereof, into interactable information and non-interactable information; the first content display unit includes: a first content display subunit configured to display the first driving-related information and the second driving-related information by using a first display rule corresponding to the first safety level, wherein the first display rule is that a display priority of the interactable information is higher than that of the non-interactable information.

Optionally, the second content display unit includes a second content display subunit configured to display the first driving-related information and the vehicle safety information by using a second display rule corresponding to the second safety level, wherein the second display rule is that the display priority of the interactable information is higher than the display priority of the non-interactable information, and higher than a display priority of the vehicle safety information.

Optionally, the third content display unit includes a third content display subunit configured to display the first driving-related information and the vehicle safety information by using a third display rule corresponding to the third safety level, wherein the third display rule is that the display priority of the vehicle safety information is higher than a display priority of the first driving-related information.

Optionally, the vehicle further includes a voice reminding content playing unit configured to play voice reminding content for guiding the user to handle an abnormality.

Optionally, the vehicle further includes an interactive instruction response unit configured to respond to an interactive instruction of the user for the voice reminding content and contact a handling personnel by using a preset communication mode.

The present invention also discloses a vehicle. The vehicle includes a processor, a memory, and a computer program stored on the memory and executable on the processor. The computer program, when executed by the processor, implements steps of the method for displaying the vehicle notification as described above.

The present disclosure also discloses a computer-readable storage medium. The computer-readable storage medium has a computer program stored thereon. The computer program, when executed by a processor, implements steps of the method for displaying the vehicle notification as described above.

The present invention the following advantages. The self-inspection can be performed on the vehicle in response to determining that the user has entered the vehicle, the vehicle safety level can be determined in accordance with the result of the self-inspection, and the corresponding interface reminding content can be displayed by using the display mode corresponding to the vehicle safety level. Through displaying the interface reminding content in the display mode corresponding to the result of the self-inspection, the user can be provided with effective reminding information and convenience during traveling, and the risk of safety hazards during traveling can be lowered.

### BRIEF DESCRIPTION OF DRAWINGS

The above and/or additional aspects and advantages of the present invention will become apparent and more readily appreciated from the following description made with reference to the drawings, in which:
FIG. 1 is a flowchart of a method for vehicle reminding according to the present disclosure;
FIG. 2 is a flowchart of another method for vehicle reminding according to the present disclosure;
FIG. 3 is a schematic diagram illustrating a scenario of a vehicle self-inspection according to the present disclosure;
FIG. 4 is a schematic diagram of a card display rule corresponding to a reminding content according to the present disclosure;
FIG. 5 is a schematic diagram of an interface corresponding to a first safety level according to the present disclosure;
FIG. 6 is a schematic diagram of an interface corresponding to a second safety level according to the present disclosure;
FIG. 7 is a schematic diagram of an interface corresponding to a third safety level according to the present disclosure;
FIG. 8 is a schematic diagram of another interface corresponding to a third safety level according to the present disclosure;
FIG. 9 is a schematic diagram of an interface corresponding to a fourth safety level according to the present disclosure;
FIG. 10 is a schematic diagram of an interface when exiting the reminder content interface according to the present disclosure; and
FIG. 11 is a block diagram of a vehicle for vehicle reminding according to the present disclosure.

### DESCRIPTION OF EMBODIMENTS

At present, some smart vehicles may use APP to open and close doors, and may have hardware feedback such as courtesy light, ambient light, start-up sound when a user has entered the vehicle, which brings a good user experience to the user. However, there is almost no software interaction, let alone a corresponding information retrieval conducted for the user, schedules, and environments.

One of core ideas of the present disclosure is in that the interface reminding content is displayed by using a display mode corresponding to a result of a self-inspection, so that the user is provided with effective reminding information and convenience during traveling, and the risk of safety hazards during traveling can be lowered.

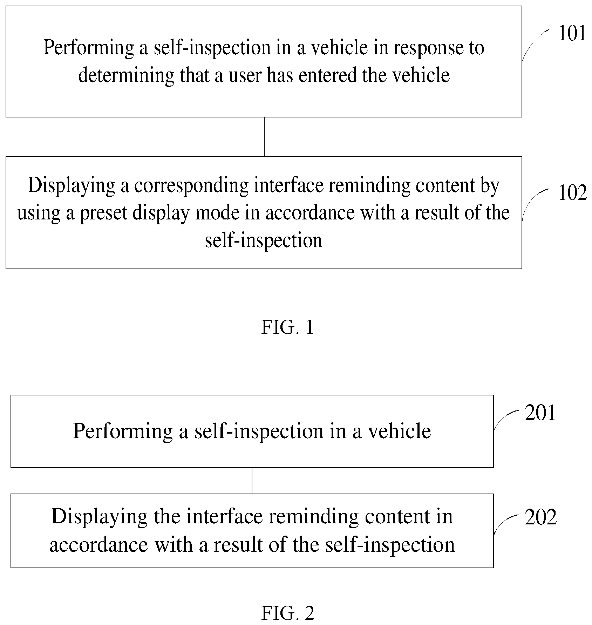

FIG. 1 is a flowchart of a method for vehicle reminding according to the present disclosure. Referring to FIG. 1, the method is applied in an in-vehicle terminal, and specifically includes the following steps.

In step 101, a self-inspection is performed in a vehicle in response to determining that a user has entered the vehicle.

In the present disclosure, the in-vehicle terminal can perform self-inspection on the vehicle after determining that the user has entered the vehicle, allowing the interface reminding content to be displayed on the interface based on a result of the self-inspection obtained after the self-inspection.

Whether the user has entered the vehicle may be determined through a variety of scenarios where, for example, the user unlocks or opens a door of a vehicle, the vehicle is powered on (an interval of two times of power-on is more than 15 minutes), a screen of the in-vehicle terminal is lightened up, and the like, and when the user has entered the vehicle, the hardware may provide a corresponding atmosphere effect, mainly embodied as start-up sound, ambient light inside the vehicle, courtesy light, interaction with cockpit hardware such as courtesy seat. The vehicle network technology is used to identify the scenario that the user has entered the vehicle, and the vehicle initiates the self-inspection after the identification.

In step 102, a corresponding interface reminding content is displayed by using a preset display mode in accordance with a result of the self-inspection.

In practical application, after the in-vehicle terminal determines that the user has entered the vehicle and then performs the self-inspection on the vehicle, the interface reminding content may be displayed on an interface of the in-vehicle terminal based on the result of the self-inspection obtained after the self-inspection. Specifically, the interface reminding content is displayed by using the preset display mode, so that different reminding contents may be displayed for the user in accordance with different results of the self-inspection, thereby providing the user with effective and personalized reminding information.

Specifically, the reminding content may include weather information, road condition information, etc., and may also plan a route for the user in accordance with actual conditions to avoid a traffic jam. Particularly, if the result of the self-inspection is abnormal, the in-vehicle terminal can prompt the user to take safety measures in time to avoid safety accidents.

According to the present disclosure, when it is determined that the user has entered the vehicle, the self-inspection is performed on the vehicle, the vehicle safety level may be determined in accordance with the result of the self-inspection, and the corresponding interface reminding content is displayed by using the display mode corresponding to the vehicle safety level. By displaying the interface reminding content in the display mode corresponding to the result of the self-inspection, the user can be provided with the effective reminding information and convenience during traveling, and the risk of safety hazards during traveling can be lowered.

FIG. 2 is a flowchart of another method for vehicle reminding according to the present disclosure. Referring to FIG. 2, the method is applied to the in-vehicle terminal, and specifically includes the following steps.

In step 201, the self-inspection is performed on the vehicle.

In the present disclosure, the in-vehicle terminal can perform the self-inspection on the vehicle after determining that the user has entered the vehicle. Specifically, the vehicle may be provided with a vehicle self-inspection module, and the vehicle self-inspection module can be configured to perform the self-inspection on the vehicle.

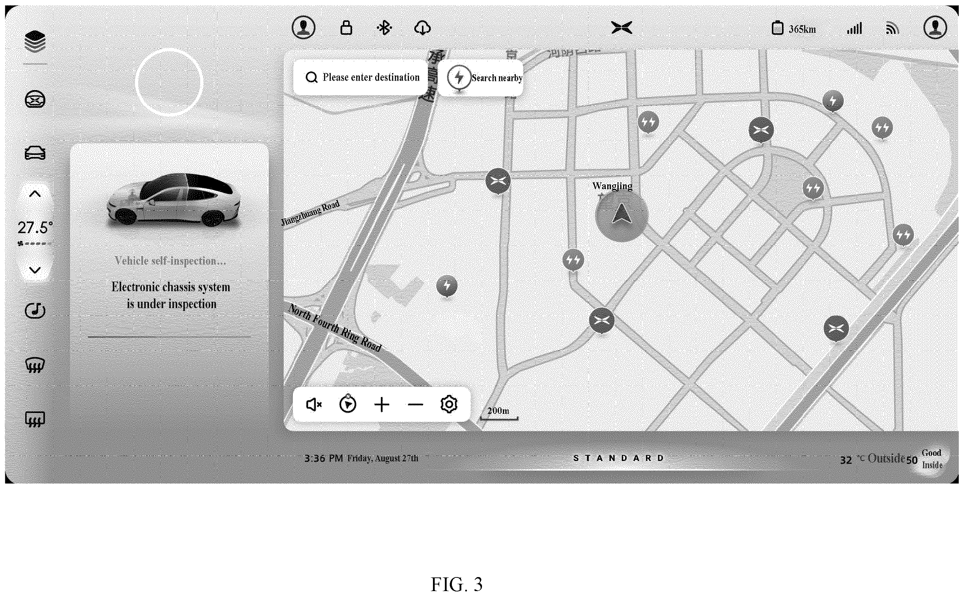

The vehicle self-inspection module is configured to perform the self-inspection on the vehicle, so as to detect a state of the vehicle and whether the vehicle affects the use. FIG. 3 is a schematic diagram illustrating a scenario of the self-inspection of the vehicle according to the present disclosure. Referring to FIG. 3, the respective items of software and hardware of the vehicle can be sequentially detected, the items undergoing the detection are displayed on a central control screen, and detected contents may include all parts and a software/hardware system of the vehicle, and the like. The software/hardware system includes a hardware system, a software system, a communication network, and the like (such as tire pressure, a battery system, an electronic brake, network flow, account login, etc.). After the detection of the above items is completed, a self-inspection state may be displayed on the central control screen, and the user is informed of the current state of the vehicle.

In step 202, the interface reminding content is displayed in accordance with the result of the self-inspection.

In practical application, after the in-vehicle terminal determines that the user has entered the vehicle and then performs the self-inspection on the vehicle, the interface reminding content may be displayed on the interface of the in-vehicle terminal in accordance with the result of the self-inspection obtained through the self-inspection. Specifically, the interface reminding content is displayed by using the preset display mode, so as to allow different reminding contents to be displayed for the user in accordance with different results of the self-inspection, thereby providing the user with the effective and personalized reminding information.

In the present disclosure, step 202 may include the following sub-steps.

In sub-step S11, the vehicle safety level is determined in accordance with the result of the self-inspection, where the vehicle safety level is used to indicate a severity of impact on driving safety.

Specifically, after the self-inspection is performed on the vehicle and the result of the self-inspection is obtained, the vehicle safety level may be determined in accordance with the result of the self-inspection, the vehicle safety level may be classified in accordance with the severity of impact on driving safety.

According to the state of the vehicle, the result of the self-inspection may include four types, i.e., normal vehicle state, minor abnormality of vehicle state, ordinary abnormality of vehicle state, and verified abnormality of vehicle state. The vehicle safety level is classified in accordance with the severity of impact on driving safety. When the result of the self-inspection is the normal vehicle state, the corresponding safety level is ranked the lowest among the four kinds of the results of the self-inspection and may be a first safety level; when the result of the self-inspection is the minor abnormality of vehicle state, the corresponding safety level may be a second safety level; when the result of the self-inspection is the ordinary abnormality of vehicle state, the corresponding safety level may be a third safety level; and when the result of the self-inspection is the verified abnormality of vehicle state, the corresponding safety level is ranked the highest among the four kinds of the results of the self-inspection and may be a fourth safety level.

In practical application, the severity of impact on driving safety may be determined in accordance with the number of abnormalities in the results of the self-inspection or in accordance with an impact degree of the abnormalities in the result of the self-inspection, or it may be determined by combining the number of abnormalities and the impact degree of the abnormalities. For example, the abnormality of a navigation detected in the self-inspection has a lower impact degree than the abnormality of a certain hardware in the vehicle. However, if the abnormality of the navigation, an unstable tire pressure, and an abnormality of a battery system simultaneously appear in the self-inspection, and the impact degrees thereof are superposed, and thus the severity of impact on driving safety may be the same as that of the abnormality of a certain hardware.

In sub-step S12, the corresponding interface reminding content is displayed by using the preset display mode in accordance with the vehicle safety level, where the preset display mode includes a plurality of display modes, and each of the plurality of display modes corresponds to one safety level.

In the present disclosure, after the vehicle safety level is determined, the interface reminding content may be displayed by using the display mode corresponding to the current safety level, the display mode may include a plurality of display modes, and each of the plurality of display modes corresponds to one safety level.

Specifically, the interface reminding content corresponding to each vehicle safety level may include a plurality of reminding contents, which may be displayed by using a card display manner, that is, each card corresponds to one reminding content, and each safety level may display a plurality of cards. For example, a weather card, a road condition card. and the like may be set. In the present disclosure, before the user starts the vehicle, a backstage may enable the vehicle to obtain and update card information through networking in advance, such as real-time information about weather, road conditions and the like, thereby saving the time for obtaining the card information.

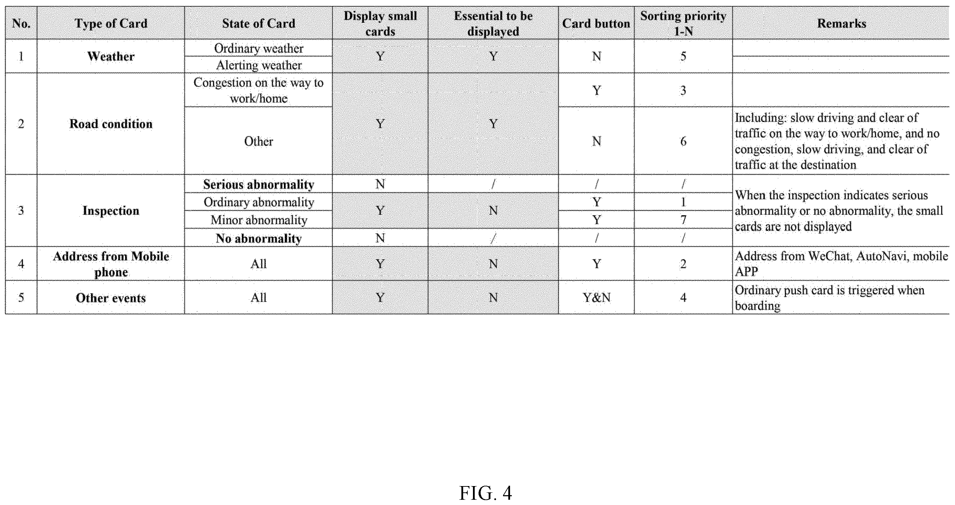

FIG. 4 is a schematic diagram of a card display rule corresponding to the reminding content according to the present disclosure. Referring to FIG. 4, at different vehicle safety levels, the cards essentially to be displayed may include a weather card and a road condition card. When the conditions are hit, the cards of inspection, mobile phone addresses, and other events (music subscription, vehicle control suggestions, etc.) can be displayed, in which the mobile phone addresses and the other events may belong to push cards, and one of the two push cards with a higher priority may be displayed. The hitting of conditions refers to reminding contents which need to be displayed when different vehicle safety levels are hit. For the number of the cards displayed and corresponding to the reminding contents, at least 2 cards may be displayed, at most 4 cards may be displayed, the cards may be sorted and queued according to the priority of 1-N, and the card is skipped if the state thereof is missing, and the next priority is filled.

In addition, the in-vehicle terminal system may also provide a highlight function and a directional control operation for the card to the user, the card with an operation button is defaulted to be high-light, the card without the operation button has no high-light, and a button action of the high-light card may be executed through an OK key of a steering wheel.

It should be noted that the displayed interface reminding content may be generated from any content within a range of the vehicle system, even within the vehicle instrument, for example, a charging module, a parking function module, an air conditioning module, and a third-party application module (Jingdong, Douyin, and Alipay) of the vehicle system, which may all be used as an information source of the interface reminding content, and the present disclosure is not limited thereto.

In the present disclosure, the sub-step S12 may include the following sub-steps.

In sub-step S121, first driving-related information is displayed when the vehicle safety level is a first safety level. The first driving-related information includes weather information and road condition information, and the first safety level is a vehicle safety level corresponding to the result of the self-inspection being normal.

A first situation may occur, when the vehicle is at the first safety level, i.e., when the result of the self-inspection is normal, and the first driving-related information may be displayed. The first driving-related information may include driving-related information carried by the in-vehicle terminal system, for example, the weather information, the road condition information, and the like. For example, the weather information may be used to display a current weather condition or a weather condition within next 2 hours, and the road condition information may be used to display contents such as a road condition on the way to work or a surrounding road condition, and a driving recommended route.

In sub-step S122, second driving-related information of the mobile terminal is obtained and displayed. The second driving-related information includes one or more of a destination address, navigation guidance information, subscription update information, or air quality information.

In the present disclosure, the in-vehicle terminal system of the vehicle may communicate with a mobile terminal of the current user or a mobile terminal of the third party. At this moment, the second driving-related information can be obtained from the mobile terminal based on the communication with the mobile terminal and can be displayed on the central control screen of the in-vehicle terminal system. The obtained second driving-related information may include any one or more of the destination address, the navigation guidance information, the subscription update information, or the air quality information.

In a preferred embodiment, information contained in the first driving-related information and the second driving-related information is classified, in accordance with an interactivity thereof, into interactable information and non-interactable information.

The first driving-related information and the second driving-related information are displayed by using a first display rule corresponding to the first safety level. The first display rule is that a display priority of the interactable information is higher than a display priority of the non-interactable information.

Specifically, the information contained in the first driving-related information and the second driving-related information may include the interactable information and the non-interactable information. In this case, when the vehicle is at the first safety level, a display order of the interface reminding content may be correspondingly limited, the first driving-related information and the second driving-related information are displayed by using the first display rule that the display priority of the interactable information is higher than the display priority of the non-interactable information. The in-vehicle terminal system displays the preferred contents as much as possible to assist efficient traveling, thereby providing the user with better use experience.

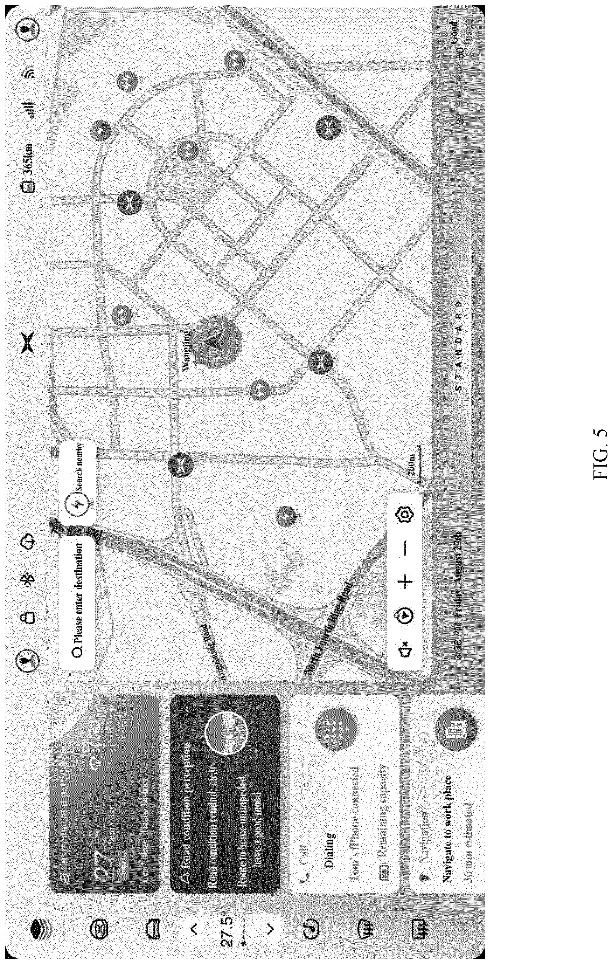

FIG. 5 is a schematic diagram of an interface corresponding to the first safety level according to the present disclosure. Referring to FIG. 5, the interface reminding content displayed on the interface may include the first driving-related information and the second driving-related information, that is, the driving-related information such as the weather, the road conditions, the surrounding road conditions, and the recommended driving routes may be displayed on the interface, and the card of self-inspection information is not displayed. In this case, the user can click the weather card, the road condition card, and other cards on the central control screen to realize a human-computer interaction, such as closing the weather card, opening recommended route details of the road condition card, clicking the recommended content of an audio card to immediately play music, and the like. Furthermore, the user may also hang a D/N gear (neutral gear) to exit the interface for displaying the reminding content, and the reminding content displayed on the interface disappears.

In sub-step S123, the first driving-related information and vehicle safety information are displayed when the vehicle safety level is a second safety level. The vehicle safety information is vehicle inspection condition information corresponding to the result of the self-inspection, and the second safety level is a vehicle safety level corresponding to the result of the self-inspection being minor abnormality.

A second situation may occur, when the vehicle is at the second safety level, that is, when the result of the self-inspection is minor abnormality, the first driving-related information and the vehicle safety information may be displayed. The vehicle safety information is the vehicle inspection condition information corresponding to the result of the self-inspection. For example, when the information about flow less than 500M is detected, the corresponding vehicle inspection condition information about a corresponding deficiency in the flow may be displayed on the interface.

In a preferred embodiment, the first driving-related information and the vehicle safety information are displayed by using a second display rule corresponding to the second safety level. The second display rule is that the display priority of the interactable information is higher than the display priority of the non-interactable information, and higher than a display priority of the vehicle safety information.

Specifically, the information contained in the first driving-related information may include the interactable information and the non-interactable information. When the vehicle is at the second safety level, the in-vehicle terminal system tends to be the minor abnormality, which does not influence the traveling of the vehicle. The display order of the reminding content of the interface may be correspondingly defined, and the first driving-related information and the vehicle safety information may be displayed by using the second display rule that the display priority of the interactable information is higher than that of the non-interactable information and is also higher than that of the vehicle safety information. That is, in this moment, the vehicle traveling information displayed on the interface may be ranked earlier than the safety information corresponding to the minor abnormality.

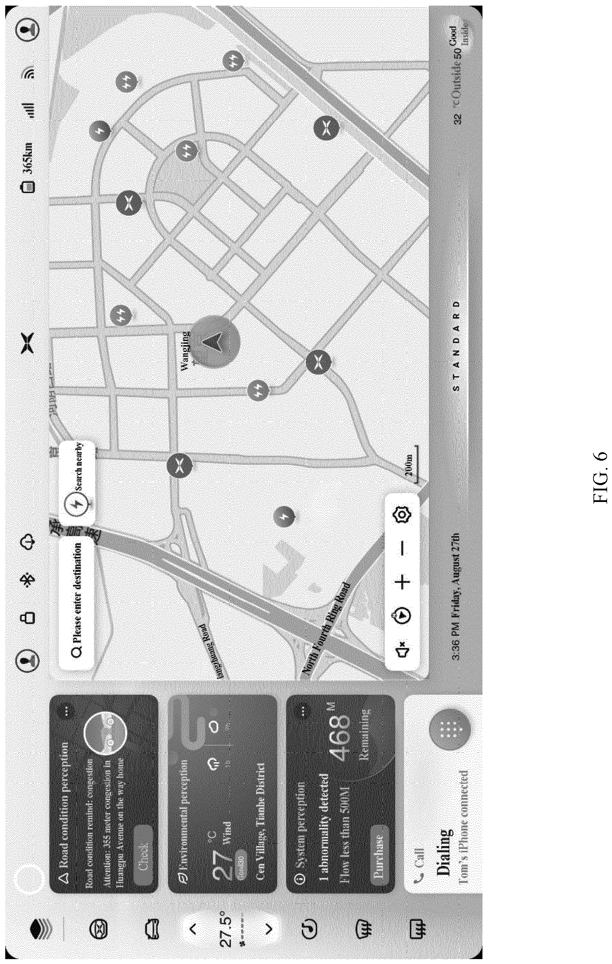

FIG. 6 is a schematic diagram of an interface corresponding to the second safety level according to the present disclosure. Referring FIG. 6, the interface reminding content displayed on the interface may include the first driving-related information and the vehicle safety information. In accordance with the second display rule corresponding to the second safety level, the driving-related information such as weather and road conditions may be preferentially displayed, and then the vehicle safety information is displayed. When the user hangs the D/N gear, the interface may be exited, and the reminding content displayed on the interface disappears.

In addition, the user may conduct a voice interactive operation of the corresponding content based on a question guidance of a voice greeting (for each voice greeting, there will be only one operation guide, and generally a card operation with a higher priority will be guided; when the card has no recommended operation, there is no voice guidance), or the user may use a confirmation key of a control on the steering wheel to confirm a guidance content. The interface interaction may perform operation or close a single card on all the card contents, and set to block the greeting when the user has entered the bus.

It should be noted that a broadcast content of a voice broadcast may be the personalized greetings and travel information, and no abnormal reminding is given at this time. For example: "Hi, Wang Xiaoming, Happy Dragon Boat Festival. The driving route is 1,500 meters congested today. Do you need to switch routes", "Hi, the weather is nice today, wish you have a good mood", "Good evening, baby fat, I received the address from WeChat, do you want to help you navigate to the destination?", and the like. The user's name to be broadcasted may be customized (account name-related, user-defined). The personalized greetings may be broadcasted, e.g., "Wish you have a good mood" or "A nice day"; or the greeting may be based on time and date, e.g., "Good morning/Good evening", "Happy National day/Happy Mid-Autumn Festival". The function interaction may be guided, and only one operation is guided by a single greeting, for example, "the current temperature in the vehicle is 42°C, do you want to turn on the rapid cooling?", and an answer of "Ok, turn on it" may perform the operation. The non-interactable important information may be broadcasted, for example, "the Meteorological Observatory issued a red warning of heavy rain, please remember to bring an umbrella". The content of the voice broadcast may be freely combined and broadcasted according to the rules, depending upon the vehicle and environment condition information, which is not limited in the present disclosure.

In sub-step S123, the first driving-related information and the vehicle safety information are displayed by using a third display rule corresponding to a third safety level when the vehicle safety level is the third safety level. The third safety level is a vehicle safety level corresponding to the result of the self-inspection being ordinary abnormality, and the third display rule is that the display priority of the vehicle safety information is higher than a display priority of the first driving-related information.

A third situation may occur, when the vehicle is at the third safety level, that is, when the result of the vehicle self-inspection is the ordinary abnormality, the first driving-related information and the vehicle safety information may be displayed. The vehicle safety information is vehicle inspection condition information corresponding to the result of the self-inspection, and the vehicle inspection condition information may include a self-inspection score, vehicle abnormal component information, and the like.

When the vehicle is at the third safety level, the in-vehicle terminal system tends to suggest the user to handle the abnormal situation of the vehicle. The display sequence of the interface reminding content may be correspondingly limited. The first driving-related information and the vehicle safety information are displayed by using the third display rule that the display priority of the vehicle safety information is higher than the display priority of the first driving-related information.

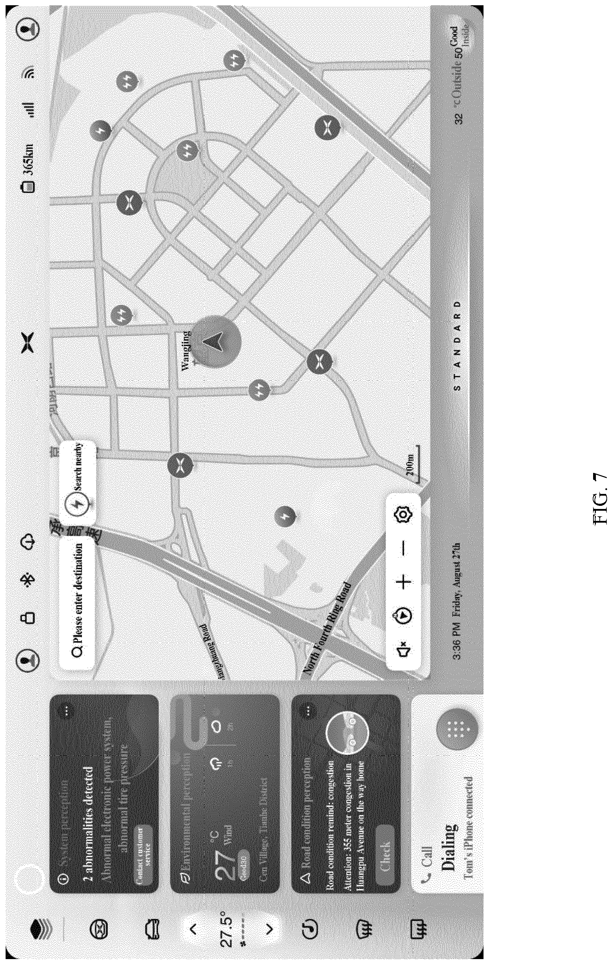

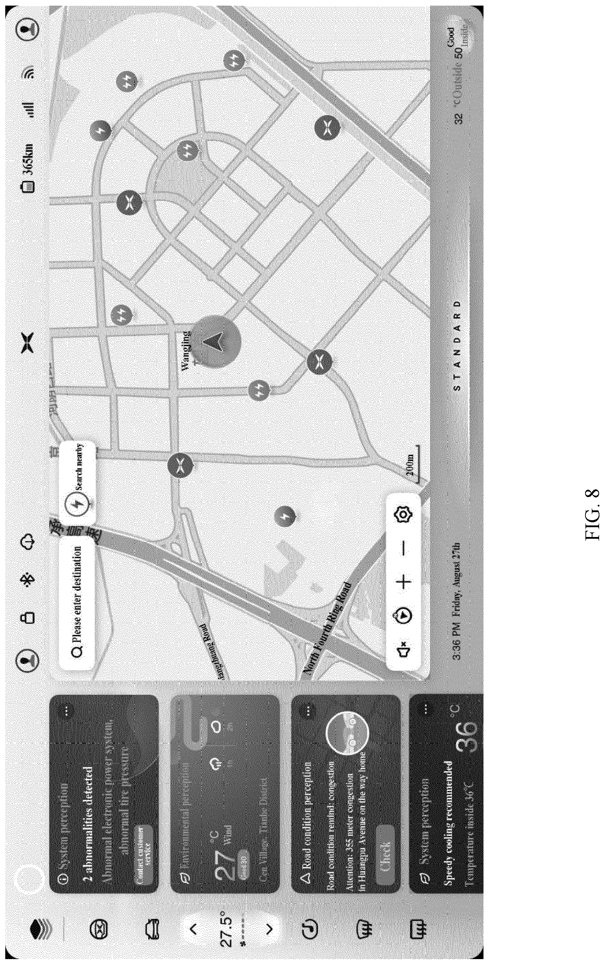

FIG. 7 is a schematic diagram of an interface corresponding to the third safety level according to the present disclosure, and FIG. 8 is a schematic diagram of another interface corresponding to the third safety level according to the present disclosure. Referring to FIG. 7 and FIG. 8, the interface reminding content displayed on the interface may include the first driving-related information and the vehicle safety information, and in accordance with the third display rule corresponding to the third safety level, the vehicle abnormal information may be preferentially displayed, and then driving-related information such as weather and road conditions may be displayed; when the user hangs the D/N gear, the interface may be exited, and the reminding content displayed on the interface disappears.

In a preferred embodiment, the method further includes playing voice reminding content for guiding the user to handle the abnormality.

The voice broadcasting only prompts the abnormal information for the user and guide the user to contact the customer service, without broadcasting other contents.

In sub-step S124, the vehicle safety information is displayed and the voice reminding content is played when the vehicle safety level is a fourth safety level. The fourth safety level is a vehicle safety level corresponding to the result of the self-inspection being serious abnormality.

A fourth situation may occur, when the vehicle is at the fourth safety level, i.e., when the vehicle result of the self-inspection is seriously abnormal, the in-vehicle terminal system tends not to recommend the user to travel, the interface reminding content intensively displays the vehicle safety information at the moment, that is, only the vehicle inspection condition information of the vehicle with the serious abnormality is displayed. The travel information such as the first driving-related information and the second driving-related information is not displayed, and in the meantime, by using a voice playing mode, the abnormality prompt may be broadcasted to the user and the user is guided to contact the customer service guide, so as to handle the serious abnormal situation.

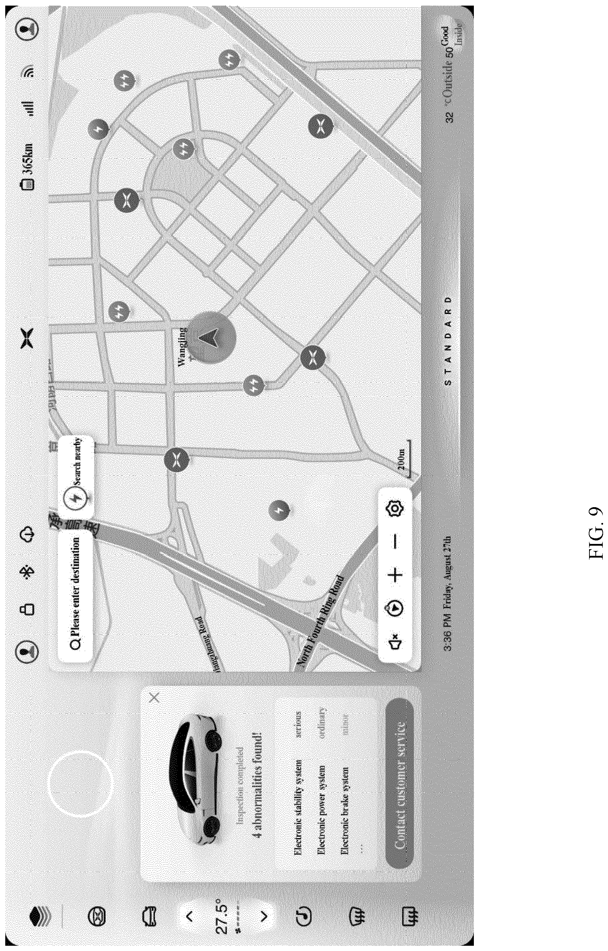

FIG. 9 is a schematic diagram of an interface corresponding to a fourth safety level according to the present disclosure. Referring to FIG. 9, the interface reminding content displayed on the interface only displays the vehicle condition information when the vehicle is in a serious abnormal state, and may include displaying the abnormal components found during the self-inspection and the corresponding abnormality level thereof, for example, an electronic system is abnormal, and the abnormality level thereof is serious; or an electronic power-assisted system is abnormal, and the abnormality level thereof is ordinary; or an electronic brake system is abnormal, the abnormality level thereof is minor, and the like.

In addition, when the user hangs the D/N gear, the reminding content (namely the vehicle safety information for displaying the vehicle condition information when the vehicle is in the serious abnormal state) displayed on the interface remains and does not disappear. The user can only exit the interface after manually clicking and closing the interface.

In a preferred embodiment, an interactive instruction of the user for the voice reminding content may be responded to, and a handling personnel is contacted by using a preset communication mode.

Specifically, the user may give an instruction by using interface clicking, voice replying, physical keys of the control on the steering wheel and the like. Illustratively, when the user clicks on an interface of the in-vehicle terminal and selects to contact customer service according to the voice reminding content to handle the abnormality, the current interface automatically jumps to a Bluetooth dialing page. If the Bluetooth of the mobile phone is connected, the dialing can be directly carried out, and if the Bluetooth is not connected, the dialing can be carried out after prompting the connection.

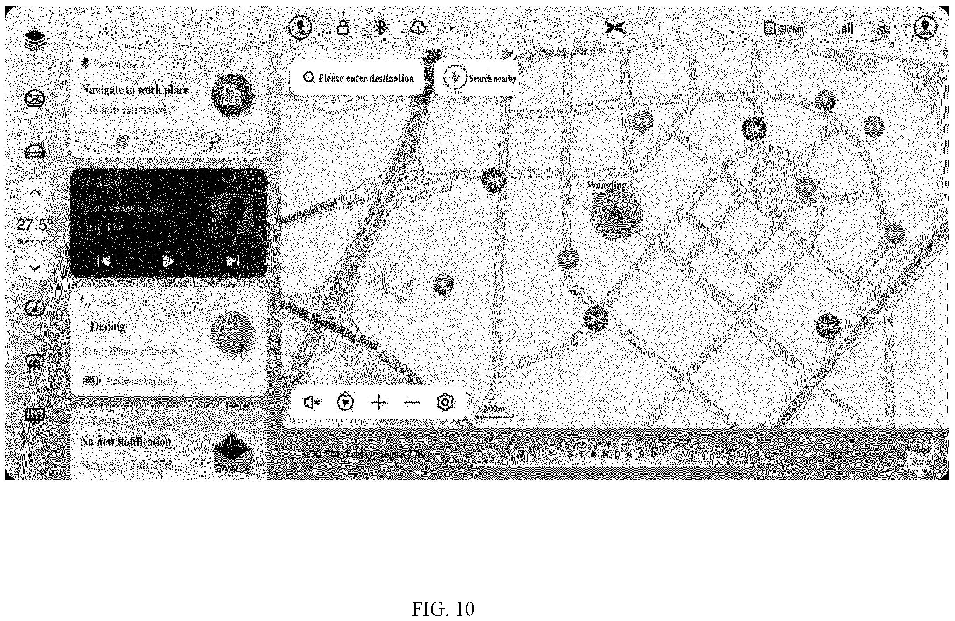

In practical applications, when exiting the interface displaying the reminding content, the reminding content displayed on the interface corresponding to different vehicle safety levels will disappear. FIG. 10 is a schematic diagram of an interface when exiting the reminder content interface according to the present disclosure. Referring to FIG. 10, the displayed content may not be limited to the first driving-related information, the second driving-related information, and the vehicle safety information, and may not be limited to the display sequence limiting the interface reminding content. It should be noted that, while exiting the interface for displaying the reminding content, the user no longer has authority for voice, operation of the control on the steering wheel, and the like.

In the present disclosure, the corresponding vehicle abnormality levels are determined in accordance with the result of the self-inspection, each vehicle abnormality level corresponds to a different interface display content, the sequence of the display contents is limited. When the vehicle abnormality is more serious, a priority of the display sequence of the vehicle abnormal information is higher, which helps the user quickly handle the abnormality. The interface reminding content and the corresponding display rule are set, and when the vehicle abnormality level is determined, the corresponding reminding contents may be displayed in accordance with the rule. Relevant information (such as vehicles, environments and accounts) of a boarding scenario may be collected, analyzed, recombined and displayed, a convenient multi-modal operation authority is provided, a traveling efficiency is improved for the user, and the user experience of the boarding-departure scenario is improved.

In embodiments of the present disclosure, the self-inspection may be performed on the vehicle in response to determining that the user has entered the vehicle, the vehicle safety level may be determined in accordance with the result of the self-inspection, and the corresponding interface reminding content is displayed by using the preset display mode in accordance with the vehicle safety level. By displaying the interface reminding content in the display mode corresponding to the result of the self-inspection, the user can be provided with the effective reminding information and convenience during traveling, and the risk of safety hazards during traveling can be lowered.

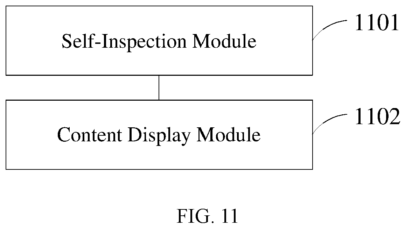

FIG. 11 is a block diagram of a vehicle for vehicle reminding according to the present disclosure. Referring to FIG. 11, the vehicle may specifically include a self-inspection module 1101 configured to perform a self-inspection in the vehicle in response to determining that the user has entered the vehicle, and a content display module 1102 configured to display a corresponding interface reminding content by using a preset display mode in accordance with a result of the self-inspection. The interface reminding content includes driving-related information, and the preset display mode includes a card display mode for the driving-related information.

In one example of the present disclosure, the content display module includes: a vehicle safety level determining submodule configured to determine a vehicle safety level in accordance with the result of the self-inspection, the vehicle safety level being used to indicate a severity of impact on driving safety; and a content display submodule configured to display the corresponding interface reminding content by using the preset display mode in accordance with the vehicle safety level, the preset display mode including a plurality of display modes, and each of the plurality of display modes corresponding to one safety level.

In one example of the present disclosure, the content display submodule includes a first content display unit configured to display first driving-related information when the vehicle safety level is a first safety level. The first driving-related information includes weather information and road condition information, and the first safety level is a vehicle safety level corresponding to the result of the self-inspection being normal.

The first content display unit is further configured to obtain second driving-related information of the mobile terminal and display the second driving-related information. The second driving-related information includes one or more of a destination address, navigation guidance information, subscription update information, or air quality information.

In one example of the present disclosure, information contained in the first driving-related information and the second driving-related information is classified, in accordance with an interactivity thereof, into interactable information and non-interactable information. The first content display unit includes a first content display subunit configured to display the first driving-related information and the second driving-related information by using a first display rule corresponding to the first safety level. The first display rule is that a display priority of the interactable information is higher than that of the non-interactable information.

In one example of the present disclosure, the content display submodule includes a second content display configured to the first driving-related information and vehicle safety information when the vehicle safety level is a second safety level. The vehicle safety information is vehicle inspection condition information corresponding to the result of the self-inspection, and the second safety level is a vehicle safety level corresponding to the result of the self-inspection being minor abnormality.

In one example of the present disclosure, the second content display unit includes a second content display subunit configured to display the first driving-related information and the vehicle safety information by using a second display rule corresponding to the second safety level. The second display rule is that the display priority of the interactable information is higher than the display priority of the non-interactable information, and higher than a display priority of the vehicle safety information.

In one example of the present disclosure, the content display submodule includes a third content display unit configured to display the first driving-related information and the vehicle safety information when the vehicle safety level is a third safety level. The third safety level is a vehicle safety level corresponding to the result of the self-inspection being ordinary abnormality.

In one example of the present disclosure, the third content display unit includes a third content display subunit configured to display the first driving-related information and the vehicle safety information by using a third display rule corresponding to the third safety level. The third display rule is that the display priority of the vehicle safety information is higher than a display priority of the first driving-related information.

In one example of the present disclosure, the vehicle further includes a voice reminding content playing unit configured to play voice reminding content for guiding the user to handle an abnormality.

In one example of the present disclosure, the content display submodule includes a fourth content display unit configured to display the vehicle safety information and play the voice reminding content when the vehicle safety level is a fourth safety level. The fourth safety level is a vehicle safety level corresponding to the result of the self-inspection being serious abnormality.

In one example of the present disclosure, the vehicle further includes an interactive instruction response unit configured to respond to an interactive instruction of the user for the voice reminding content and contact a handling personnel by using a preset communication mode.

With respect to the apparatus, since it is basically similar to the method, the description thereof is relatively simple, and the relevant parts can be referred to the description of the method.

The present disclosure also provides a vehicle. The vehicle includes a processor, a memory, and a computer program stored on the memory and executable on the processor. The computer program, when executed by the processor, implements the respective processes of the method for vehicle reminding as described above, and can achieve the same technical effects may be achieved, which is not described in detail to avoid repetition.

The present disclosure further provides a computer-readable storage medium. The computer-readable storage medium has a computer program stored thereon. The computer program, when being executed by a processor, implements the respective processes of the method for vehicle reminding as described above, and can achieve the same technical effects may be achieved, which is not described in detail to avoid repetition.

Each embodiment in the specification is described in a progressive manner. Each embodiment focuses on differences from other embodiments. The same or similar parts of various embodiments can be referred to each other.

Those skilled in the art should understand that the present disclosure can be embodied as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including, but not limited to, disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing. Thus, the instructions executed on the computer or other programmable terminal devices provide steps for implementing functions specified in one or more processes in the flowchart and/or one or more blocks in the block diagram.

Further, It should be noted that relational terms herein, such as "first" and "second", are used only for differentiating one entity or operation from another entity or operation, which do not necessarily require or imply that there should be any real relationship or sequence between the entities or operations. Also, terms "comprise", "include", or any other variations thereof are meant to cover non-exclusive inclusion, and thus the process, method, article or terminal device including a series of elements do not only include those elements, but also include other elements that are not explicitly listed, or also include inherent elements of the process, method, article or terminal device. Without specific restrictions, an element defined by the expression "comprises a ..." does not exclude the presence of additional identical elements in the process, method, article or terminal device that includes the said element.

The method for vehicle reminding and the vehicle for vehicle reminding provided by the present disclosure are described in detail above, and the principle and the implementation mode of the present disclosure are explained with specific examples. The above description is only used to help understand the method and the core ideas of the present disclosure. Meanwhile, for a person skilled in the art, according to the ideas of the present disclosure, may change the specific embodiments and the application range. In summary, the content of the present specification should not be construed as a limitation of the present disclosure.

## Claims

1. A method for displaying a vehicle notification, applied in an in-vehicle terminal, the method comprising:
performing a self-inspection in a vehicle in response to determining that a user has entered the vehicle; and
displaying a corresponding interface reminding content by using a preset display mode in accordance with a result of the self-inspection, wherein the interface reminding content comprises driving-related information, and the preset display mode comprises a card display mode for the driving-related information,
wherein said displaying the corresponding interface reminding content by using the preset display mode in accordance with the result of the self-inspection comprises:
determining a vehicle safety level in accordance with the result of the self-inspection, wherein the vehicle safety level is used to indicate a severity of impact on driving safety; and
displaying the corresponding interface reminding content by using the preset display mode in accordance with the vehicle safety level, wherein the preset display mode comprises a plurality of display modes, and each of the plurality of display modes corresponds to one safety level,
**characterized in that**, said displaying the corresponding interface reminding content by using the preset display mode in accordance with the vehicle safety level comprises:
displaying first driving-related information when the vehicle safety level is a first safety level, wherein the first driving-related information comprises weather information and road condition information, and the first safety level is a vehicle safety level corresponding to the result of the self-inspection being normal;
displaying the first driving-related information and vehicle safety information when the vehicle safety level is a second safety level, wherein the vehicle safety information is vehicle inspection condition information corresponding to the result of the self-inspection, and the second safety level is a vehicle safety level corresponding to the result of the self-inspection being minor abnormality;
displaying the first driving-related information and the vehicle safety information by using a third display rule corresponding to a third safety level when the vehicle safety level is the third safety level, wherein the third safety level is a vehicle safety level corresponding to the result of the self-inspection being ordinary abnormality, and the third display rule is that the display priority of the vehicle safety information is higher than a display priority of the first driving-related information; and
displaying the vehicle safety information and playing the voice reminding content when the vehicle safety level is a fourth safety level, wherein the fourth safety level is a vehicle safety level corresponding to the result of the self-inspection being serious abnormality.

2. The method according to claim 1, wherein the in-vehicle terminal is configured to communicate with a mobile terminal, and said displaying the first driving-related information when the vehicle safety level is the first safety level comprises:
obtaining second driving-related information of the mobile terminal, and displaying the second driving-related information, wherein the second driving-related information comprises one or more of a destination address, navigation guidance information, subscription update information, or air quality information.

3. The method according to claim 2, wherein information contained in the first driving-related information and the second driving-related information is classified, in accordance with an interactivity thereof, into interactable information and non-interactable information;
wherein said displaying the first driving-related information comprises:
displaying the first driving-related information by using a first display rule corresponding to the first safety level, wherein the first display rule is that a display priority of the interactable information is higher than a display priority of the non-interactable information, and
wherein said displaying the second driving-related information comprises:
displaying the second driving-related information by using the first display rule.

4. The method according to claim 1, wherein said displaying the first driving-related information and the vehicle safety information comprises:
displaying the first driving-related information and the vehicle safety information by using a second display rule corresponding to the second safety level, wherein the second display rule is that the display priority of the interactable information is higher than the display priority of the non-interactable information, and higher than a display priority of the vehicle safety information.

5. The method according to claim 1, wherein said displaying the first driving-related information and the vehicle safety information comprises:
playing voice reminding content for guiding the user to handle an abnormality.

6. The method according to claim 1, further comprising:
responding to an interactive instruction of the user for the voice reminding content, and contacting a handling personnel by using a preset communication mode.

7. A vehicle display device for displaying a vehicle notification, comprising:
a self-inspection module (1101) configured to perform a self-inspection in the vehicle in response to determining that a user has entered the vehicle;
a content display module (1102) configured to display a corresponding interface reminding content by using a preset display mode in accordance with a result of the self-inspection, wherein the interface reminding content comprises driving-related information, and the preset display mode comprises a card display mode for the driving-related information,
wherein the content display module comprises:
a vehicle safety level determining submodule configured to determine a vehicle safety level in accordance with the result of the self-inspection, wherein the vehicle safety level is used to indicate a severity of impact on driving safety;
a content display module configured to display the corresponding interface reminding content by using the preset display mode in accordance with the vehicle safety level, wherein the preset display mode comprises a plurality of display modes, and each of the plurality of display modes corresponds to one safety level,
**characterized in that**, the content display submodule comprises:
a first content display unit configured display first driving-related information when the vehicle safety level is a first safety level, wherein the first driving-related information comprises weather information and road condition information, and the first safety level is a vehicle safety level corresponding to the result of the self-inspection being normal;
a second content display unit configured to display the first driving-related information and vehicle safety information when the vehicle safety level is a second safety level, wherein the vehicle safety information is vehicle inspection condition information corresponding to the result of the self-inspection, and the second safety level is a vehicle safety level corresponding to the result of the self-inspection being minor abnormality;
a third content display unit configured to display the first driving-related information and the vehicle safety information by using a third display rule corresponding to a third safety level when the vehicle safety level is the third safety level, wherein the third safety level is a vehicle safety level corresponding to the result of the self-inspection being ordinary abnormality, and the third display rule is that the display priority of the vehicle safety information is higher than a display priority of the first driving-related information; and
a fourth content display unit configured to display the vehicle safety information and playing the voice reminding content when the vehicle safety level is a fourth safety level, wherein the fourth safety level is a vehicle safety level corresponding to the result of the self-inspection being serious abnormality.

8. A vehicle, comprising:
the vehicle display device according to claim 7;
a processor;
a memory; and
a computer program stored on the memory and executable on the processor,
wherein the computer program, when executed by the processor, implements steps of the method for displaying the vehicle notification according to any one of claims 1 to 6.

9. A computer-readable storage medium, having a computer program stored thereon, wherein the computer program, when executed by a processor, implements steps of the method for displaying the vehicle notification according to any one of claims 1 to 6.

## Patentansprüche

1. Verfahren zum Anzeigen einer Fahrzeugmeldung, angewandt in einem Fahrzeugterminal, wobei das Verfahren Folgendes beinhaltet:
Durchführen einer Selbstinspektion in einem Fahrzeug als Reaktion auf die Feststellung, dass ein Benutzer das Fahrzeug betreten hat; und
Anzeigen eines entsprechenden Schnittstellenerinnerungsinhalts unter Verwendung eines voreingestellten Anzeigemodus gemäß einem Ergebnis der Selbstinspektion, wobei der Schnittstellenerinnerungsinhalt fahrbezogene Informationen umfasst und der voreingestellte Anzeigemodus einen Kartenanzeigemodus für die fahrbezogenen Informationen umfasst,
wobei das genannte Anzeigen des entsprechenden Schnittstellenerinnerungsinhalts unter Verwendung des voreingestellten Anzeigemodus gemäß dem Ergebnis der Selbstinspektion Folgendes beinhaltet:
Bestimmen einer Fahrzeugsicherheitsstufe gemäß dem Ergebnis der Selbstinspektion, wobei die Fahrzeugsicherheitsstufe verwendet wird, um eine Schwere der Auswirkung auf die Fahrsicherheit anzugeben; und
Anzeigen des entsprechenden Schnittstellenerinnerungsinhalts unter Verwendung des voreingestellten Anzeigemodus gemäß der Fahrzeugsicherheitsstufe, wobei der voreingestellte Anzeigemodus mehrere Anzeigemodi umfasst und jeder der mehreren Anzeigemodi einer Sicherheitsstufe entspricht,
**dadurch gekennzeichnet, dass** das genannte Anzeigen des entsprechenden Schnittstellenerinnerungsinhalts unter Verwendung des voreingestellten Anzeigemodus gemäß der Fahrzeugsicherheitsstufe Folgendes beinhaltet:
Anzeigen erster fahrbezogener Informationen, wenn die Fahrzeugsicherheitsstufe eine erste Sicherheitsstufe ist, wobei die ersten fahrbezogenen Informationen Wetterinformationen und Straßenzustandsinformationen umfassen, und die erste Sicherheitsstufe eine Fahrzeugsicherheitsstufe ist, die dem entspricht, dass das Ergebnis der Selbstinspektion normal ist;
Anzeigen der ersten fahrbezogenen Informationen und der Fahrzeugsicherheitsinformationen, wenn die Fahrzeugsicherheitsstufe eine zweite Sicherheitsstufe ist, wobei die Fahrzeugsicherheitsinformationen Fahrzeuginspektionszustandsinformationen entsprechend dem Ergebnis der Selbstinspektion sind, und die zweite Sicherheitsstufe eine Fahrzeugsicherheitsstufe ist, die dem entspricht, dass das Ergebnis der Selbstinspektion eine geringfügige Anomalie ist;
Anzeigen der ersten fahrbezogenen Informationen und der Fahrzeugsicherheitsinformationen unter Verwendung einer dritten Anzeigeregel, die einer dritten Sicherheitsstufe entspricht, wenn die Fahrzeugsicherheitsstufe die dritte Sicherheitsstufe ist, wobei die dritte Sicherheitsstufe eine Fahrzeugsicherheitsstufe ist, die dem entspricht, dass das Ergebnis der Selbstinspektion eine gewöhnliche Anomalie ist, und die dritte Anzeigeregel die ist, dass die Anzeigepriorität der Fahrzeugsicherheitsinformationen höher ist als eine Anzeigepriorität der ersten fahrbezogenen Informationen; und
Anzeigen der Fahrzeugsicherheitsinformationen und Abspielen des Spracherinnerungsinhalts, wenn die Fahrzeugsicherheitsstufe eine vierte Sicherheitsstufe ist, wobei die vierte Sicherheitsstufe eine Fahrzeugsicherheitsstufe ist, die dem entspricht, dass das Ergebnis der Selbstinspektion eine schwere Anomalie ist.

2. Verfahren nach Anspruch 1, wobei das Fahrzeugterminal zum Kommunizieren mit einem mobilen Terminal konfiguriert ist, und das genannte Anzeigen der ersten fahrbezogenen Informationen, wenn die Fahrzeugsicherheitsstufe die erste Sicherheitsstufe ist, Folgendes beinhaltet:
Erhalten zweiter fahrbezogener Informationen des mobilen Terminals, und Anzeigen der zweiten fahrbezogenen Informationen, wobei die zweiten fahrbezogenen Informationen eines oder mehrere von einer Zieladresse, Navigationsführungsinformationen, Abonnementaktualisierungsinformationen oder Luftqualitätsinformationen umfassen.

3. Verfahren nach Anspruch 2, wobei in den ersten fahrbezogenen Informationen und den zweiten fahrbezogenen Informationen enthaltene Informationen gemäß ihrer Interaktivität in interaktionsfähige Informationen und nicht interaktionsfähige Informationen eingestuft werden;
wobei das genannte Anzeigen der ersten fahrbezogenen Informationen Folgendes beinhaltet:
Anzeigen der ersten fahrbezogenen Informationen unter Verwendung einer ersten Anzeigeregel entsprechend der ersten Sicherheitsstufe, wobei die erste Anzeigeregel darin besteht, dass eine Anzeigepriorität der interaktionsfähigen Informationen höher ist als eine Anzeigepriorität der nicht interaktionsfähigen Informationen, und
wobei das genannte Anzeigen der zweiten fahrbezogenen Informationen Folgendes beinhaltet:
Anzeigen der zweiten fahrbezogenen Informationen unter Verwendung der ersten Anzeigeregel.

4. Verfahren nach Anspruch 1, wobei das genannte Anzeigen der ersten fahrbezogenen Informationen und der Fahrzeugsicherheitsinformationen Folgendes beinhaltet:
Anzeigen der ersten fahrbezogenen Informationen und der Fahrzeugsicherheitsinformationen unter Verwendung einer zweiten Anzeigeregel entsprechend der zweiten Sicherheitsstufe, wobei die zweite Anzeigeregel darin besteht, dass die Anzeigepriorität der interaktionsfähigen Informationen höher als die Anzeigepriorität der nicht interaktionsfähigen Informationen und höher als eine Anzeigepriorität der Fahrzeugsicherheitsinformationen ist.

5. Verfahren nach Anspruch 1, wobei das genannte Anzeigen der ersten fahrbezogenen Informationen und der Fahrzeugsicherheitsinformationen Folgendes beinhaltet:
Abspielen eines Spracherinnerungsinhalts, um den Benutzer anzuleiten, eine Anomalie zu handhaben.

6. Verfahren nach Anspruch 1, das ferner Folgendes beinhaltet:
Reagieren auf eine interaktive Anweisung des Benutzers für den Spracherinnerungsinhalt, und Kontaktieren von Handhabungspersonal unter Verwendung eines voreingestellten Kommunikationsmodus.

7. Fahrzeuganzeigegerät zur Anzeige einer Fahrzeugmeldung, das Folgendes umfasst:
ein Selbstinspektionsmodul (1101), konfiguriert zum Durchführen einer Selbstinspektion in dem Fahrzeug als Reaktion auf die Feststellung, dass ein Benutzer das Fahrzeug betreten hat;
ein Inhaltsanzeigemodul (1102), konfiguriert zum Anzeigen eines entsprechenden Schnittstellenerinnerungsinhalts unter Verwendung eines voreingestellten Anzeigemodus gemäß einem Ergebnis der Selbstinspektion, wobei der Schnittstellenerinnerungsinhalt fahrbezogene Informationen umfasst und der voreingestellte Anzeigemodus einen Kartenanzeigemodus für die fahrbezogenen Informationen umfasst,
wobei das Inhaltsanzeigemodul Folgendes umfasst:
ein Fahrzeugsicherheitsstufenbestimmung-Submodul, konfiguriert zum Bestimmen einer Fahrzeugsicherheitsstufe gemäß dem Ergebnis der Selbstinspektion, wobei die Fahrzeugsicherheitsstufe verwendet wird, um eine Schwere der Auswirkung auf die Fahrsicherheit anzugeben;
ein Inhaltsanzeigemodul, konfiguriert zum Anzeigen des entsprechenden Schnittstellenerinnerungsinhalts unter Verwendung des voreingestellten Anzeigemodus gemäß der Fahrzeugsicherheitsstufe, wobei der voreingestellte Anzeigemodus mehrere Anzeigemodi umfasst und jeder der mehreren Anzeigemodi einer Sicherheitsstufe entspricht,
**dadurch gekennzeichnet, dass** das Inhaltsanzeige-Submodul Folgendes umfasst:
eine erste Inhaltsanzeigeeinheit, konfiguriert zum Anzeigen erster fahrbezogener Informationen, wenn die Fahrzeugsicherheitsstufe eine erste Sicherheitsstufe ist, wobei die ersten fahrbezogenen Informationen Wetterinformationen und Straßenzustandsinformationen umfassen, und die erste Sicherheitsstufe eine Fahrzeugsicherheitsstufe ist, die dem entspricht, dass das Ergebnis der Selbstinspektion normal ist;
eine zweite Inhaltsanzeigeeinheit, konfiguriert zum Anzeigen der ersten fahrbezogenen Informationen und Fahrzeugsicherheitsinformationen, wenn die Fahrzeugsicherheitsstufe eine zweite Sicherheitsstufe ist, wobei die Fahrzeugsicherheitsinformationen Fahrzeuginspektionszustandsinformationen entsprechend dem Ergebnis der Selbstinspektion sind, und die zweite Sicherheitsstufe eine Fahrzeugsicherheitsstufe ist, die dem entspricht, dass das Ergebnis der Selbstinspektion eine geringfügige Anomalie ist;
eine dritte Inhaltsanzeigeeinheit, konfiguriert zum Anzeigen der ersten fahrbezogenen Informationen und der Fahrzeugsicherheitsinformationen unter Verwendung einer dritten Anzeigeregel entsprechend einer dritten Sicherheitsstufe, wenn die Fahrzeugsicherheitsstufe die dritte Sicherheitsstufe ist, wobei die dritte Sicherheitsstufe eine Fahrzeugsicherheitsstufe ist, die dem entspricht, dass das Ergebnis der Selbstinspektion eine gewöhnliche Anomalie ist, und die dritte Anzeigeregel darin besteht, dass die Anzeigepriorität der Fahrzeugsicherheitsinformationen höher ist als eine Anzeigepriorität der ersten fahrbezogenen Informationen; und
eine vierte Inhaltsanzeigeeinheit, konfiguriert zum Anzeigen der Fahrzeugsicherheitsinformationen und zum Abspielen des Spracherinnerungsinhalts, wenn die Fahrzeugsicherheitsstufe eine vierte Sicherheitsstufe ist, wobei die vierte Sicherheitsstufe eine Fahrzeugsicherheitsstufe ist, die dem entspricht, dass Ergebnis der Selbstinspektion eine schwere Anomalie ist.

8. Fahrzeug, das Folgendes umfasst:
das Fahrzeuganzeigegerät nach Anspruch 7;
einen Prozessor;
einen Speicher; und
ein Computerprogramm, das auf dem Speicher gespeichert ist und auf dem Prozessor ausgeführt werden kann,
wobei das Computerprogramm bei Ausführung durch den Prozessor Schritte des Verfahrens zum Anzeigen der Fahrzeugmeldung nach einem der Ansprüche 1 bis 6 implementiert.

9. Computerlesbares Speichermedium, auf dem ein Computerprogramm gespeichert ist, wobei das Computerprogramm bei Ausführung durch einen Prozessor Schritte des Verfahrens zum Anzeigen der Fahrzeugmeldung nach einem der Ansprüche 1 bis 6 implementiert.

## Revendications

1. Un procédé d'affichage d'une notification de véhicule, appliqué dans un terminal embarqué à bord d'un véhicule, le procédé comprenant :
l'exécution d'une auto-inspection dans un véhicule en réponse à la détermination qu'un utilisateur est entré dans le véhicule, et
l'affichage d'un contenu de rappel d'interface correspondante au moyen d'un mode d'affichage prédéfini conformément à un résultat de l'auto-inspection, où le contenu de rappel d'interface comprend des informations relatives à la conduite, et le mode d'affichage prédéfini comprend un mode d'affichage par carte pour les informations relatives à la conduite,
où ledit affichage du contenu de rappel d'interface correspondante au moyen du mode d'affichage prédéfini conformément au résultat de l'auto-inspection comprend :
la détermination d'un niveau de sécurité du véhicule conformément au résultat de l'auto-inspection, où le niveau de sécurité du véhicule est utilisé de façon à indiquer une sévérité d'un impact sur la sécurité de conduite, et
l'affichage du contenu de rappel d'interface correspondante au moyen du mode d'affichage prédéfini conformément au niveau de sécurité du véhicule, où le mode d'affichage prédéfini comprend une pluralité de modes d'affichage, et chaque mode d'affichage de la pluralité de modes d'affichage correspond à un niveau de sécurité,
**caractérisé en ce que** ledit affichage du contenu de rappel d'interface correspondante au moyen du mode d'affichage prédéfini conformément au niveau de sécurité du véhicule comprend :
l'affichage de premières informations relatives à la conduite lorsque le niveau de sécurité du véhicule est un premier niveau de sécurité, où les premières informations relatives à la conduite comprennent des informations météorologiques et des informations sur les conditions routières, et le premier niveau de sécurité est un niveau de sécurité du véhicule correspondant au fait que le résultat de l'auto-inspection est normal,
l'affichage des premières informations relatives à la conduite et d'informations de sécurité du véhicule lorsque le niveau de sécurité du véhicule est un deuxième niveau de sécurité, où les informations de sécurité du véhicule sont des informations de condition d'inspection du véhicule correspondant au résultat de l'auto-inspection, et le deuxième niveau de sécurité est un niveau de sécurité du véhicule correspondant au fait que le résultat de l'auto-inspection est une anomalie mineure,
l'affichage des premières informations relatives à la conduite et des informations de sécurité du véhicule au moyen d'une troisième règle d'affichage correspondant à un troisième niveau de sécurité lorsque le niveau de sécurité du véhicule est le troisième niveau de sécurité, où le troisième niveau de sécurité est un niveau de sécurité du véhicule correspondant au fait que le résultat de l'auto-inspection est une anomalie ordinaire, et la troisième règle d'affichage est que la priorité d'affichage des informations de sécurité du véhicule est plus élevée qu'une priorité d'affichage des premières informations relatives à la conduite, et
l'affichage des informations de sécurité du véhicule et la diffusion du contenu de rappel d'une voix lorsque le niveau de sécurité du véhicule est un quatrième niveau de sécurité, où le quatrième niveau de sécurité est un niveau de sécurité du véhicule correspondant au fait que le résultat de l'auto-inspection est une anomalie sérieuse.

2. Le procédé selon la Revendication 1, où le terminal embarqué à bord d'un véhicule est configuré de façon à communiquer avec un terminal mobile, et ledit affichage des premières informations relatives à la conduite lorsque le niveau de sécurité du véhicule est le premier niveau de sécurité comprend :
l'obtention de deuxièmes informations relatives à la conduite du terminal mobile, et l'affichage des deuxièmes informations relatives à la conduite, où les deuxièmes informations relatives à la conduite comprennent un ou plusieurs éléments parmi une adresse de destination, des informations de guidage par navigation, des informations d'actualisation d'abonnement ou des informations de qualité de l'air.

3. Le procédé selon la Revendication 2, où les informations contenues dans les premières informations relatives à la conduite et les deuxièmes informations relatives à la conduite sont classées, conformément à une interactivité de celles-ci, en informations permettant une interaction et en informations ne permettant pas une interaction,
où ledit affichage des premières informations relatives à la conduite comprend :
l'affichage des premières informations relatives à la conduite au moyen d'une première règle d'affichage correspondant au premier niveau de sécurité, où la première règle d'affichage est qu'une priorité d'affichage des informations permettant une interaction est plus élevée qu'une priorité d'affichage des informations ne permettant pas une interaction, et
où ledit affichage des deuxièmes informations relatives à la conduite comprend :
l'affichage des deuxièmes informations relatives à la conduite au moyen de la première règle d'affichage.

4. Le procédé selon la Revendication 1, où ledit affichage des premières informations relatives à la conduite et des informations de sécurité du véhicule comprend :
l'affichage des premières informations relatives à la conduite et des informations de sécurité du véhicule au moyen d'une deuxième règle d'affichage correspondant au deuxième niveau de sécurité, où la deuxième règle d'affichage est que la priorité d'affichage des informations permettant une interaction est plus élevée que la priorité d'affichage des informations ne permettant pas une interaction, et plus élevée qu'une priorité d'affichage des informations de sécurité du véhicule.

5. Le procédé selon la Revendication 1, où ledit affichage des premières informations relatives à la conduite et des informations de sécurité du véhicule comprend :
la diffusion d'un contenu de rappel d'une voix destiné au guidage de l'utilisateur de façon à gérer une anomalie.

6. Le procédé selon la Revendication 1, comprenant en outre :
la réponse à une instruction interactive de l'utilisateur pour le contenu de rappel d'une voix, et la mise en contact avec un personnel de gestion au moyen d'un mode de communication prédéfini.

7. Un dispositif d'affichage de véhicule destiné à l'affichage d'une notification de véhicule, comprenant :
un module d'auto-inspection (1101) configuré de façon à exécuter une auto-inspection dans le véhicule en réponse à la détermination qu'un utilisateur est entré dans le véhicule,
un module d'affichage d'un contenu (1102) configuré de façon à afficher un contenu de rappel d'interface correspondante au moyen d'un mode d'affichage prédéfini conformément à un résultat de l'auto-inspection, où le contenu de rappel d'interface comprend des informations relatives à la conduite, et le mode d'affichage prédéfini comprend un mode d'affichage par carte pour les informations relatives à la conduite,
où le module d'affichage d'un contenu comprend :
un sous-module de détermination d'un niveau de sécurité du véhicule configuré de façon à déterminer un niveau de sécurité du véhicule conformément au résultat de l'auto-inspection, où le niveau de sécurité du véhicule est utilisé de façon à indiquer une sévérité d'un impact sur la sécurité de conduite,
un module d'affichage d'un contenu configuré de façon à afficher le contenu de rappel d'interface correspondante au moyen du mode d'affichage prédéfini conformément au niveau de sécurité du véhicule, où le mode d'affichage prédéfini comprend une pluralité de modes d'affichage, et chaque mode d'affichage de la pluralité de modes d'affichage correspond à un niveau de sécurité,
**caractérisé en ce que** le sous-module d'affichage d'un contenu comprend :
une première unité d'affichage d'un contenu configurée de façon à afficher des premières informations relatives à la conduite lorsque le niveau de sécurité du véhicule est un premier niveau de sécurité, où les premières informations relatives à la conduite comprennent des informations météorologiques et des informations sur les conditions routières, et le premier niveau de sécurité est un niveau de sécurité du véhicule correspondant au fait que le résultat de l'auto-inspection est normal,
une deuxième unité d'affichage d'un contenu configurée de façon à afficher les premières informations relatives à la conduite et des informations de sécurité du véhicule lorsque le niveau de sécurité du véhicule est un deuxième niveau de sécurité, où les informations de sécurité du véhicule sont des informations de condition d'inspection du véhicule correspondant au résultat de l'auto-inspection, et le deuxième niveau de sécurité est un niveau de sécurité du véhicule correspondant au fait que le résultat de l'auto-inspection est une anomalie mineure,
une troisième unité d'affichage d'un contenu configurée de façon à afficher les premières informations relatives à la conduite et les informations de sécurité du véhicule au moyen d'une troisième règle d'affichage correspondant à un troisième niveau de sécurité lorsque le niveau de sécurité du véhicule est le troisième niveau de sécurité, où le troisième niveau de sécurité est un niveau de sécurité du véhicule correspondant au fait que le résultat de l'auto-inspection est une anomalie ordinaire, et la troisième règle d'affichage est que la priorité d'affichage des informations de sécurité du véhicule est plus élevée qu'une priorité d'affichage des premières informations relatives à la conduite, et
une quatrième unité d'affichage d'un contenu configurée de façon à afficher les informations de sécurité du véhicule et la diffusion du contenu de rappel d'une voix lorsque le niveau de sécurité du véhicule est un quatrième niveau de sécurité, où le quatrième niveau de sécurité est un niveau de sécurité du véhicule correspondant au fait que le résultat de l'auto-inspection est une anomalie sérieuse.

8. Un véhicule, comprenant :
le dispositif d'affichage de véhicule selon la Revendication 7,
un processeur,
une mémoire, et
un programme informatique conservé en mémoire sur la mémoire et exécutable sur le processeur,
où le programme informatique, lorsqu'il est exécuté par le processeur, met en oeuvre les opérations du procédé d'affichage de la notification de véhicule selon l'une quelconque des Revendications 1 à 6.

9. Un support à mémoire lisible par ordinateur, possédant un programme informatique conservé en mémoire sur celui-ci, où le programme informatique, lorsqu'il est exécuté par un processeur, met en oeuvre les opérations du procédé d'affichage de la notification de véhicule selon l'une quelconque des Revendications 1 à 6.
